# EUROPÄISCHE PATENTSCHRIFT

(11) **EP 2 399 778 B1**
(45) Veröffentlichungstag und Bekanntmachung des Hinweises auf die Patenterteilung: **02.01.2013**
(21) Anmeldenummer: 10167557.7
(22) Anmeldetag: 28.06.2010
(51) Int. Cl.: B60R 1/06

(54) **Außenrückblickspiegelanordnung**
External rear view mirror assembly
Agencement de rétroviseur extérieur

(43) Veröffentlichungstag der Anmeldung: 28.12.2011
(73) Patentinhaber: SMR Patents S.à.r.l., 1653 Luxembourg (LU)
(72) Erfinder: Schmierer, Arne, 73230, Kirchheim (DE); Negel, Raimund, 72669, Unterensingen (DE); Herrmann, Andreas, 71364, Winnenden-Baach (DE); Szmolenszki, Istvan, 71409, Schwaikheim (DE)
(74) Vertreter: Weber-Bruls, Dorothée

(56) Entgegenhaltungen:
- WO-A1-01/94091
- BE-A- 703 478
- DE-A1- 4 323 534
- DE-A1- 10 338 797
- US-A1- 2009 147 388

## Beschreibung

Die Erfindung betrifft eine Außenrückblickspiegelanordnung eines Kraftfahrzeugs gemäß dem Oberbegriff des Anspruchs 1.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Spiegelfuß kann beispielsweise als Druckgussteil aus einem den auftretenden Kräften und Momenten widerstehenden Werkstoff hergestellt sein. Der Außenrückblickspiegel umfasst ein Außenrückblickspiegelgehäuse, welches unter anderem einen dem Spiegelfuß zugeordneten Grundträger beherbergt.

US-A-2009/0147388 zeigt ein anderes Beispiel einer Außenrückblickspiegelanordnung.

Spiegelfuß und Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Dabei können Lagermittel zwischen Spiegelfuß und Grundträger vorgesehen sein, um Verschleiß und auftretende Reibungskräfte während des Verschwenkens möglichst gering zu halten.

Der Grundträger ist vorzugsweise ebenfalls als Druckgussteil aus einem den auftretenden Kräften und Momenten widerstehenden Werkstoff hergestellt, beispielsweise aus dem selben Werkstoff wie der Spiegelfuß. Auf dem Grundträger ist eine beispielsweise elektromotorisch betätigbare Verstellanordnung für ein Spiegelglas angeordnet. Die Verstellanordnung wirkt auf eine Trägerplatte ein, auf der das Spiegelglas angeordnet ist. Beispielsweise kann das Spiegelglas mittels einer Klebeverbindung auf der Trägerplatte montiert sein. Die Trägerplatte kann an der Verstellanordnung und/oder an der Grundplatte geführt und/oder gelagert sein.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Außenrückblickspiegel kann zudem eine Wiederholblinkleuchte, ein Modul für eine Fahrassistenzvorrichtung, wie etwa eine Totwinkelüberwachung, eine Spurverlasswarnung, eine Annäherungsüberwachung, oder dergleichen, oder eine Kombination hiervon aufweisen. Alternativ oder zusätzlich kann der Außenrückblickspiegel Sensoren zur Erfassung von Fahr- und/oder Umgebungszuständen, wie beispielsweise Temperatur, Helligkeit, Verschmutzungsgrad, Beleuchtungssituation aufweisen, beispielsweise um das Spiegelglas automatisch zu beheizen oder z.B. elektrochromatisch abzublenden.

Ein bekanntes Ziel bei der Entwicklung und Herstellung von Kraftfahrzeugkomponenten ist eine einfache, zeitsparende Montage. Beispielsweise kann zur Verkleidung des Spiegelfußes vorgesehen sein, dass die Spiegelfußabdeckung passgenau eine der gelenkigen Verbindung zwischen Spiegelfuß und Grundträger zugeordnete Öffnung aufweist. Die Passgenauigkeit ist einerseits erforderlich, um mit der Spiegelfußabdeckung der exakten Positionierung von Spiegelfuß und Außenrückblickspiegel nachzukommen, und um andererseits geringe Spaltmaße einzuhalten, beispielsweise um das Eindringen von Spritzwasser zu verhindern.

Da die Spiegelfußabdeckung ein verhältnismäßig großes Bauteil darstellt, das üblicherweise im Spritzgussverfahren hergestellt wird, kann es durch Maßabweichungen und Toleranzen vorkommen, dass die Öffnung und die gelenkige Verbindung zumindest derart nicht auf Anhieb korrespondieren, wodurch die Montage erschwert wird. Dies führt zu unnötig hohem Montageaufwand gegebenenfalls verbunden mit unerwünschtem Ausschuss.

Auch bei passgenauer Herstellung der Spiegelfußabdeckung ist die bei der Montage vorzunehmende Verbindung von Spiegelfuß und Spiegelfußabdeckung schwierig. Die Schwierigkeit beruht unter anderem darauf, dass einem Verbinden von Spiegelfuß und Spiegelfußabdeckung, beispielsweise durch eine Verschraubung, ein Ineinander- bzw. Hineinschieben des Spiegelfußes in die Spiegelfußabdeckung vorausgeht. Dabei muss die in der Spiegelfußabdeckung vorgesehene Öffnung für die gelenkige Verbindung zwischen Spiegelfuß und dem im Außenrückblickspiegel untergebrachten Grundträger zumindest in der vorgesehenen Endlage des Ineinanderschiebens mit dem spiegelfußseitigen Teil der gelenkigen Verbindung wenigstens zur Deckung gebracht werden. Handelt es sich bei dem spiegelfußseitigen Teil z.B. um eine starr am Spiegelfuß angeordnete Welle mit einer Erstreckung entlang der Gelenkachse, so stellt sich die Montage allein schon wegen der verhältnismäßig großen Abmessungen dieser Welle im Vergleich zu den Innenabmessungen des von der Spiegelfußabdeckung umschlossenen Raums als schwierig dar. Hinzu kommt die komplexe Geometrie des Spiegelfußes und der Spiegelfußabdeckung, welche es unmöglich macht, dass die Bewegungsrichtung von Spiegelfuß und Spiegelfußabdeckung während des Ineinanderschiebens mit der Längsachse der Welle und der Mittelachse der Öffnung übereinstimmt. Um dennoch das Ineinanderschieben zu ermöglichen, muss gleichzeitig eine komplizierte Verdrehbewegung ausgeführt werden, um den Zapfen bei der Montage durch die vorgesehene Öffnung hindurch führen zu können. Unter anderem diese Verdrehbewegung in Verbindung mit dem Ineinanderschieben stellt einen erheblichen Zeitfaktor bei der Montage einer Außenrückblickspiegelanordnung dar.

Um dieses Problem zu beheben ist bekannt, dass die Öffnung größer ausgeführt wird, als für den spiegelfußseitigen Teil der gelenkigen Verbindung erforderlich. Eine zwischen dem Rand der Öffnung und dem spiegelfußseitigen Teil der gelenkigen Verbindung verbleibende Partie der Öffnung ist durch eine Spiegelfußdeckelanordnung abgedeckt. Die Spiegelfußdeckelanordnung besteht aus einem Spiegelfußdeckel aus einer steifen, harten Komponente. Zwischen dem Rand der Öffnung und dem Spiegelfußdeckel bzw. der äußeren Kontur des Spiegelfußdeckels ist eine Dichtung aus einer elastischen, weichen Komponente vorgesehen, welche das Eindringen von Spritzwasser und/oder Schmutz beispielsweise in den von der Spiegelfußabdeckung umschlossenen Raum verhindert. Die Dichtung ist umlaufend an den Spiegelfußdeckel angespritzt. Die Spiegelfußdeckelanordnung kann hierzu z.B. im Zwei- oder Mehrkomponentenspritzgussverfahren hergestellt sein. Beim Einsetzen der Spiegelfußdeckelanordnung wird die Dichtung unter gleichzeitiger Abdichtung des Spalts zwischen Spiegelfußdeckel und dem Rand der Öffnung elastisch verformt.

Ein Nachteil hierbei ist, dass die Dichtung unter Beibehaltung ihres Volumens deformiert wird, wodurch es zu einem Kontakt zwischen Dichtung und Außenrückblickspiegel bzw. außenrückblickspiegelseitigem Teil der gelenkigen Verbindung zwischen Spiegelfuß und Grundträger kommen kann. Bei einem Verschwenken des Außenrückblickspiegels gegenüber dem Spiegelfuß aus einer Betriebsstellung in eine Anklappstellung und umgekehrt um die Gelenkachse der gelenkigen Verbindung zwischen Spiegelfuß und Grundträger kommt es dadurch zu einer Mitnahme der Spiegelfußdeckelanordnung. Dadurch können unerwünschte Verschleißerscheinungen, das Eindringen von Flüssigkeit und/oder Schmutz sowie ein nachteiliger Qualitätseindruck auftreten.

Eine Aufgabe der Erfindung ist es eine verbesserte Spiegelfußabdeckung zu entwickeln, welche eine Verkleidung eines Spiegelfußes mit geringem Montageaufwand zulässt und einen hohen Qualitätseindruck bei gleichzeitig geringem Verschleiß und zuverlässiger Abdichtung gegenüber Flüssigkeit und Schmutz aufweist.

Die Aufgabe wird gelöst durch die Merkmale des Anspruchs 1.

Demnach ist eine Außenrückblickspiegelanordnung eines Kraftfahrzeugs vorgesehen, welche zur Verkleidung eines an dem Kraftfahrzeug montierbaren bzw. montierten Spiegelfußes vorgesehen ist. Die Spiegelfußabdeckung ist mit einer Öffnung für einen spiegelfußseitigen Teil einer gelenkigen Verbindung eines vorzugsweise in einem Außenrückblickspiegelgehäuse untergebrachten Grundträgers mit dem Spiegelfuß versehen. Die Öffnung ist größer ausgeführt, als für den spiegelfußseitigen Teil der gelenkigen Verbindung erforderlich. Dadurch wird die Montage der Spiegelfußabdeckung erheblich vereinfacht, da die vorzugsweise passgenaue Abdeckung der zwischen dem Rand der Öffnung und dem spiegelfußseitigen Teil der gelenkigen Verbindung verbleibenden Partie der Öffnung erst nach dem Ineinanderschieben von Spiegelfuß und Spiegelfußabdeckung durch Einsetzten des Spiegelfußdeckels erfolgt. Somit wird die zum Zusammenfügen von Spiegelfuß und Spiegelfußabdeckung erforderliche Bewegung vereinfacht, was zu einer erheblichen Zeit- und Kostenersparnis bei der Montage führt. Eine zwischen dem Rand der Öffnung und dem spiegelfußseitigen Teil der gelenkigen Verbindung verbleibende Partie der Öffnung ist durch eine Spiegelfußdeckelanordnung verschlossen. Die Spiegelfußdeckelanordnung deckt bevorzugt die Öffnung samt einer den spiegelfußseitigen Teil der gelenkigen Verbindung tragenden bzw. umgebenden Partie des Spiegelfußes bis auf den spiegelfußseitigen Teil der gelenkigen Verbindung ab. Die Spiegelfußdeckelanordnung besteht aus einem die verbleibende Partie der Öffnung nur zum Teil abdeckenden Spiegelfußdeckel und einer an diesen angespritzten, einen verbleibenden Spalt zwischen Spiegelfußdeckel und dem Rand der Öffnung überdeckenden bzw. abdeckenden Dichtung. Der Spiegelfußdeckel ist aus einer ersten, beispielsweise harten und steifen Komponente hergestellt, wohingegen die Dichtung aus einer zweiten, vorzugsweise weichen, elastischen Komponente besteht, beispielsweise aus einem Elastomer. Bei beiden Komponenten kann es sich um thermoplastische Kunststoffe handeln. Der Spiegelfußdeckel selbst kann eine vorzugsweise passgenaue Ausnehmung für den spiegelfußseitigen Teil der gelenkigen Verbindung aufweisen. Die Ausnehmung kann in Form einer zentralen Öffnung ausgeführt sein, so dass sich der Spiegelfußdeckel allseitig um die zentrale Öffnung herum erstreckt. Der Spiegelfußdeckel reicht zumindest abschnittsweise bis an den Rand der Öffnung, so dass er zumindest stellenweise Kontakt mit dem Rand der Öffnung hat. Hierzu können am Umfang des Spiegelfußdeckels Fortsätze angeordnet sein, welche bei in die Öffnung eingesetzter Spiegelfußdeckelanordnung in der durch den Rand der Öffnung aufgespannten Fläche liegen und bis an den Rand der Öffnung reichen, so dass ein Kontakt zwischen Spiegelfußdeckel und dem Rand der Öffnung hergestellt ist. Durch die getroffene Maßnahme erstrecken sich zumindest einzelne, die Kontaktstellen mit dem Rand der Öffnung umfassende Partien des Spiegelfußdeckels zumindest vom Rand der Öffnung bis hin zu dem durch die zentrale Öffnung reichenden spiegelfußseitigen Teil der gelenkigen Verbindung. Die Dichtung ist vorzugsweise im Zwei- oder Mehrkomponentenspritzgussverfahren an den Spiegelfußdeckel angespritzt und schließt wenigstens einen verbleibenden Spalt zwischen dem Rand der Öffnung und dem Spiegelfußdeckel. Die Dichtung kann zusätzlich den Rand der Öffnung überlappen. Alternativ oder zusätzlich kann die Dichtung den Spiegelfußdeckel überlappen und/oder überdecken und bis an den spiegelfußseitigen Teil der gelenkigen Verbindung reichen bzw. an den spiegelfußseitigen Teil der gelenkigen Verbindung angrenzen. Die Dichtung kann umlaufend am Spiegelfußdeckel angespritzt sein.

Vorteile der Erfindung gegenüber dem Stand der Technik ergeben sich unter anderem dadurch, dass sich die Spiegelfußdeckelanordnung mittels der harten, steifen Komponente des Spiegelfußdeckels nunmehr direkt am Rand der Öffnung abstützen kann. Der stellenweise hergestellte Kontakt genügt, um den Spiegelfußdeckel bei einem auf ihn bzw. die Spiegelfußdeckelanordnung einwirkenden Drehmoment gegenüber dem Rand der Öffnung abzustützen, so dass dieser in seiner vorgesehenen Position und Lage verweilt. Durch diese Abstützung wird ein Verdrehen bzw. eine Mitnahme der Spiegelfußdeckelanordnung bei einem Verschwenken des Außenrückblickspiegels gegenüber dem Spiegelfuß aus einer Betriebsstellung in eine Anklappstellung und umgekehrt um die Gelenkachse der gelenkigen Verbindung zwischen Spiegelfuß und Grundträger wirkungsvoll verhindert. Dadurch wird ein gleich bleibend hoher Qualitätseindruck bei gleichzeitig geringem Verschleiß und zuverlässiger Abdichtung gegenüber Flüssigkeit und Schmutz erreicht.

Der Spiegelfußdeckel hat vorzugsweise mindestens eine von einem gedachten Mittelpunkt des Spiegelfußdeckels aus gesehen radial nach außen abstehende, mit dem Rand der Öffnung an wenigstens einer Stelle korrespondierende Lasche, welche den Rand der Öffnung von einer Draufsicht auf eine durch den Rand der Öffnung aufgespannte Fläche aus gesehen hintergreift. Der Mittelpunkt kennzeichnet sich dadurch aus, dass er im Wesentlichen zentral im Spiegelfußdeckel bzw. in der durch die Kontur des Spiegelfußdeckels gebildeten Fläche liegt. Mittels der Lasche kann der Spiegelfußdeckel passgenau am Rand der Öffnung angesetzt werden und anschließend durch eine Klappbewegung um ein durch das Anlegen der Lasche gebildetes vereinfachtes Scharniergelenk in die durch die Öffnung gebildete Fläche geklappt werden. Vorzugsweise liegt die Lasche innerhalb einer Kontaktstellen mit dem Rand der Öffnung umfassenden Partie des Spiegelfußdeckels, so dass der Lasche ein am Umfang des Spiegelfußdeckels angeordneter Fortsatz aus harter, steifer Komponente gegenüberliegt.

Darüber hinaus kann der Spiegelfußdeckel über wenigstens eine biege- und/oder federelastisch verformbare Rastnase verfügen, welche den Rand der Öffnung von einer Draufsicht auf die durch den Rand der Öffnung aufgespannte Fläche aus gesehen hintergreift. Vorzugsweise ist wenigstens eine Rastnase in einem der mindestens einen radial nach außen abstehenden Lasche gegenüberliegenden Bereich des Spiegelfußdeckels angeordnet. Rastnase und Rand der Öffnung bilden so eine Rast- oder Klipsverbindung, welche in Verbindung mit der mindestens einen radial nach außen abstehenden, den Rand der Öffnung auf einer gegenüberliegenden Seite des Spiegelfußdeckels hintergreifenden Lasche geeignet ist, den Spiegelfußdeckel unter Abdeckung des zwischen dem Rand der Öffnung und dem spiegelfußseitigen Teil der gelenkigen Verbindung verbleibenden Bereichs der Öffnung zu fixieren. Alternativ ist denkbar, einen Rastvorsprung an der Spiegelfußabdeckung unterhalb des Randes der Öffnung vorzusehen, und am Spiegelfußdeckel ein beispielsweise senkrecht zur durch die Kontur des Spiegelfußdeckels aufgespannten Fläche in die Öffnung abstehendes Rastfenster vorzusehen, welches der Rastnase zugeordnet ist. Es ist ersichtlich, dass gegenüber dieser Ausführung eine am Spiegelfußdeckel angeordnete, den Rand der Öffnung hintergreifende Rastnase den Vorteil aufweist, einfacher und kostengünstiger herstellbar zu sein, da auf eine spezielle Ausgestaltung eines mit der Rastnase zusammenwirkenden Rastmittels, wie etwa einem Rastfenster, verzichtet werden kann, und stattdessen der Rand der Öffnung als korrespondierendes Rastmittel genutzt wird. Die Rastnase kann innerhalb einer Kontaktstellen mit dem Rand der Öffnung umfassenden Partie des Spiegelfußdeckels angeordnet sein, so dass der Rastnase ein am Umfang des Spiegelfußdeckels angeordneter Fortsatz aus harter, steifer Komponente gegenüberliegt, mit dem sich der Spiegelfußdeckel am Rand der Öffnung abstützt. Dadurch wird eine zuverlässige Rastwirkung der Rast- oder Klipsverbindung sichergestellt, da im Vergleich zum Stand der Technik, wo eine ungenaue Lage des Spiegelfußdeckels durch die allseitig zwischen dem Spiegelfußdeckel und dem Rand der Öffnung befindliche Dichtung billigend in Kauf genommen wird, eine präzise Ausrichtung des Spiegelfußdeckels innerhalb der Öffnung sichergestellt ist.

An der Spiegelfußabdeckung kann im Bereich der Öffnung eine Aufnahmetasche für einen an der den spiegelfußseitigen Teil der gelenkigen Verbindung tragenden Partie des Spiegelfußes angeordneten Vorsprung vorgesehen sein. Die Form der Aufnahmetasche und die Form des Vorsprungs können derart miteinander korrespondieren, dass der Vorsprung bis zu einer vorgegebenen Tiefe in die Aufnahmetasche eindringen kann. Vorzugsweise findet beim Ineinanderschieben von Vorsprung und Aufnahmetasche eine Selbstzentrierung statt.

Wenigstens eine federelastisch verformbare Rastnase kann in einem der Aufnahmetasche im den zwischen dem Rand der Öffnung und dem spiegelfußseitigen Teil der gelenkigen Verbindung verbleibenden Bereich der Öffnung abdeckenden Zustand des Spiegelfußdeckels gegenüberliegenden Bereich des Spiegelfußdeckels angeordnet sein. Die Rastnase kann die Aufnahmetasche wenigstens zum Teil hintergreifen und so zur Verrastung von Spiegelfußdeckel und Spiegelfußabdeckung beitragen.

Auch zum spiegelfußseitigen Teil der gelenkigen Verbindung hin kann eine beispielsweise umlaufende Dichtung vorgesehen sein. Befindet sich die Ausnehmung für den spiegelfußseitigen Teil der gelenkigen Verbindung am Rand der in der Spiegelfußabdeckung vorgesehenen Öffnung, so kann eine Dichtung sowohl zur Abdichtung zwischen dem Spiegelfußdeckel und dem Rand, als auch zwischen dem Spiegelfußdeckel und dem spiegelfußseitigen Teil der gelenkigen Verbindung dienen.

Die angespritzte Dichtung kann so ausgeführt sein, dass sie gleichzeitig die gelenkige Verbindung gegen Staub und Spritzwasser schützt. Hierzu kann die Dichtung über die vom Rand der in der Spiegelfußabdeckung vorgesehenen Öffnung aufgespannte Fläche in Richtung zum den Grundträger beherbergenden Außenrückblickspiegelgehäuse abstehen.

Die Dichtung besteht bevorzugt aus einem thermoplastischen Elastomer.

Um die Öffnung herum können mit den Rastnasen und/oder Laschen korrespondierende Versteifungen und/oder Rastfedem und/oder Rastfenster und/oder Aufnahmetaschen oder dergleichen vorgesehen sein.

Grundsätzlich ist auch denkbar, dass die Anordnung von Rastnasen bzw. -federn und zugeordnete Hintergreifungen am Spiegelfußdeckel und am Rand der Öffnung auch vertauscht ausgeführt sein kann, so dass entgegen den obigen Ausführungen eine Rastnase an der Spiegelfußabdeckung im Bereich des Randes der Öffnung und eine korrespondierende Hintergreifung, z.B. eine Lasche mit einem Rastfenster am Spiegelfußdeckel angeordnet ist. Auch eine gemischte Anordnung ist denkbar, wobei mindestens eine Rastnase am Spiegelfußdeckel und mindestens eine Rastnase an der Spiegelfußabdeckung vorgesehen ist. Mit den Rastnasen korrespondierende Rastmittel sind am jeweils anderen Bauteil angeordnet.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
- Fig. 1: eine einen Spiegelfuß verkleidende Spiegelfußabdeckung für eine Außenrückblickspiegelanordnung eines Kraftfahrzeugs von einer zur kraftfahrzeugseitigen Montage vorgesehenen Seite aus gesehen.
- Fig. 2: die Spiegelfußabdeckung aus Fig. 1 in einer Draufsicht in Richtung der Gelenkachse einer gelenkigen Verbindung zwischen einem Grundträger und dem von der Spiegelfußabdeckung verkleideten Spiegelfuß gesehen.
- Fig. 3: einen Schnitt durch die Spiegelfußabdeckung und den Spiegelfuß aus Fig. 2 entlang der dort mit A-A gekennzeichneten Schnittebene.
- Fig. 4: die selbe Draufsicht auf die Spiegelfußabdeckung wie in Fig. 2 ohne den Spiegelfuß.
- Fig. 5: eine Spiegelfußabdeckung mit montiertem Spiegelfußdeckel in einer Draufsicht.
- Fig. 6: eine Spiegelfußabdeckung mit montiertem Spiegelfußdeckel und umlaufender Dichtung in einer Draufsicht.
- Fig. 7: einen Spiegelfußdeckel mit angespritzter umlaufender Dichtung in perspektivischer Ansicht.
- Fig. 8: den Spiegelfußdeckel aus Fig. 7 in einer ersten Seitenansicht.
- Fig. 9: den Spiegelfußdeckel aus Fig. 7 in einer zweiten Seitenansicht.

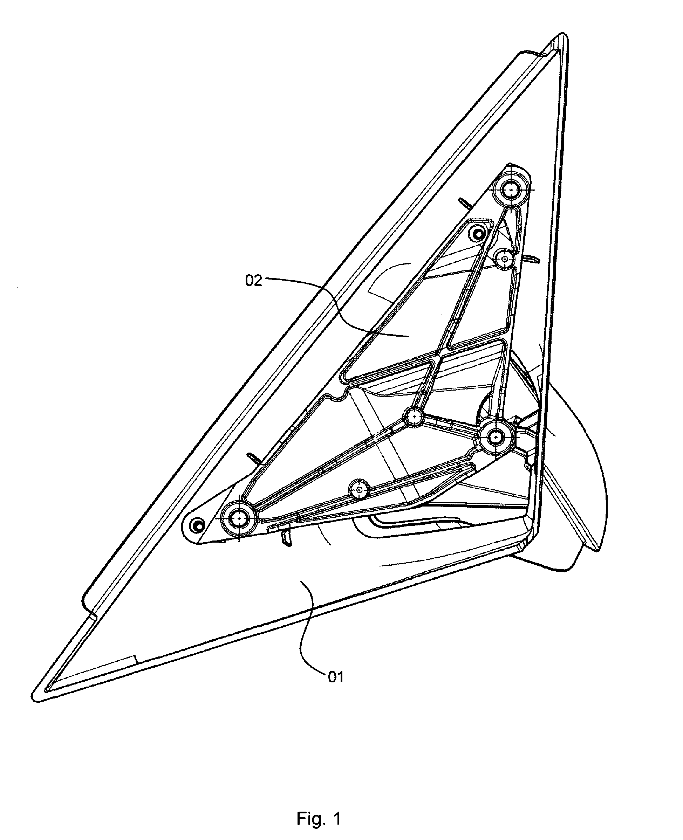

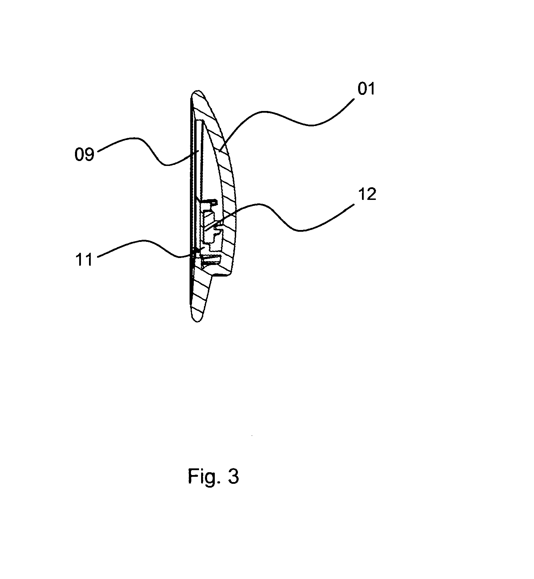

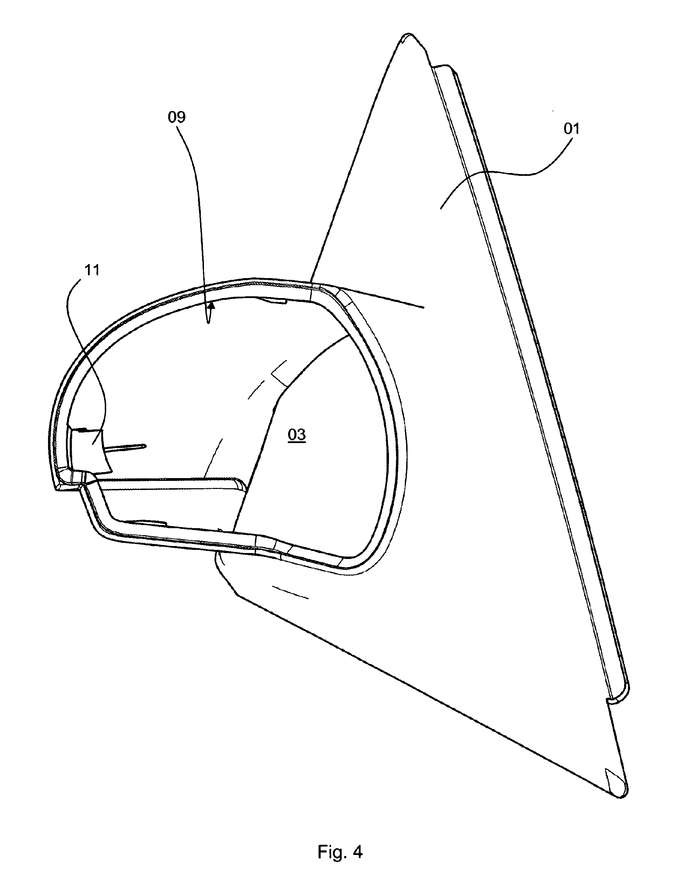

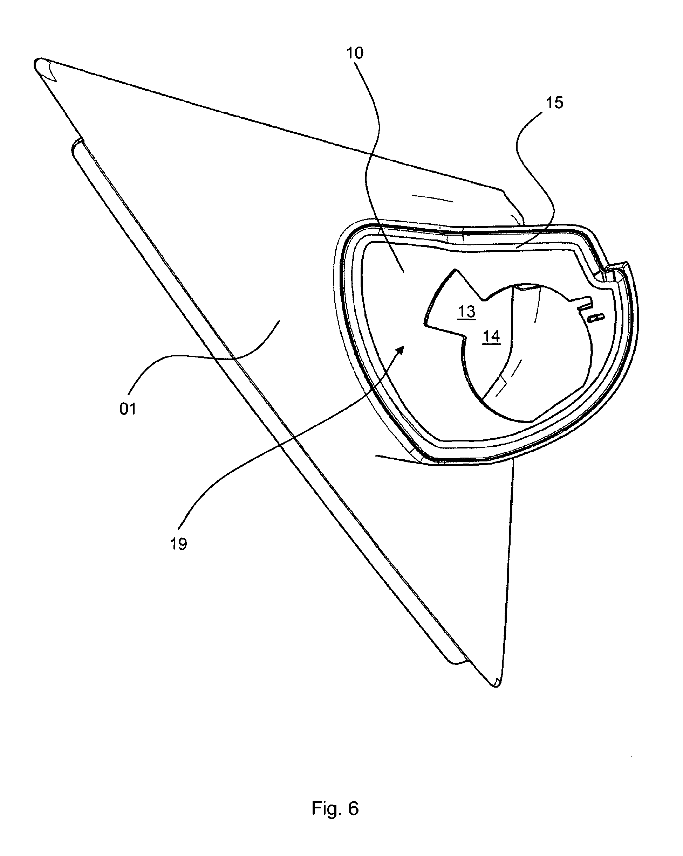

Eine in den Fig. 1 bis 9 ganz oder in Teilen dargestellte Spiegelfußabdeckung 01 für eine Außenrückblickspiegelanordnung eines Kraftfahrzeugs ist zur Verkleidung eines an dem Kraftfahrzeug montierbaren bzw. montierten Spiegelfuß 02 vorgesehen. Die Spiegelfußabdeckung 01 verfügt über eine Öffnung 03 für einen spiegelfußseitigen Teil 04 einer gelenkigen Verbindung eines beispielsweise in einem Außenrückblickspiegelgehäuse beherbergten Grundträgers mit dem Spiegelfuß 02. Der spiegelfußseitige Teil 04 der gelenkigen Verbindung umfasst beispielsweise ein Auflager 05 und eine starr am Spiegelfuß angeordnete Welle 06 mit einer Erstreckung entlang der Gelenkachse 07 der gelenkigen Verbindung. Darüber hinaus kann ein ebenfalls zum spiegelfußseitigen Teil 04 der gelenkigen Verbindung gehörender Zapfen 08 vorgesehen sein, der als Endanschlag für eine Schwenkbewegung des Außenrückblickspiegels aus einer Betriebsstellung in eine Anklappstellung und umgekehrt um die Gelenkachse 07 vorgesehen sein kann.

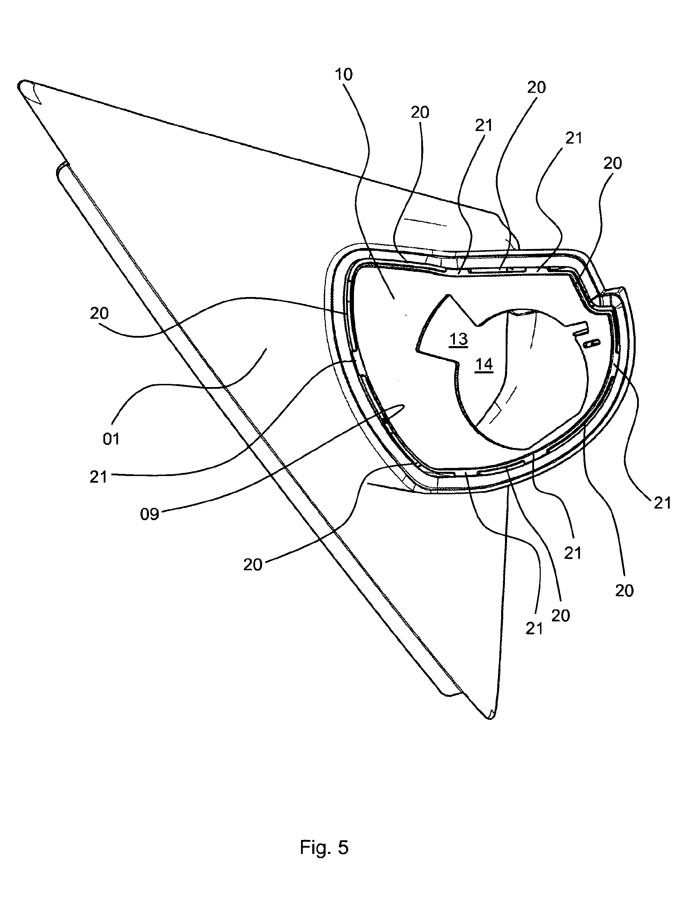

Die Öffnung 03 ist größer ausgeführt, als für den spiegelfußseitigen Teil 04 der gelenkigen Verbindung erforderlich. Eine zwischen dem Rand 09 der Öffnung 03 und dem spiegelfußseitigen Teil 04 der gelenkigen Verbindung verbleibende Partie der Öffnung 03 wird durch eine Spiegelfußdeckelanordnung 19 bestehend aus einem Spiegelfußdeckel 10 und einer an den Spiegelfußdeckel 10 umlaufend angespritzten, einen verbleibenden Spalt 20 bzw. verbleibende Spaltabschnitte 20 (Fig. 5) zwischen dem Rand 09 der Öffnung 03 und dem Spiegelfußdeckel 10 überdeckenden Dichtung 15 verschlossen. Der Spiegelfußdeckel 10 selbst reicht zumindest abschnittsweise bis an den Rand 09 der Öffnung 03 und hat mit diesem zumindest stellenweise Kontakt. Am Umfang des Spiegelfußdeckels 10 sind hierzu Fortsätze 21 angeordnet, welche bei in die Öffnung 03 eingesetzter Spiegelfußdeckelanordnung 19 in der durch den Rand 09 der Öffnung 03 aufgespannten Fläche liegen und bis an den Rand 09 der Öffnung 03 reichen, so dass ein Kontakt zwischen Spiegelfußdeckel 10 und dem Rand 09 der Öffnung 03 hergestellt ist.

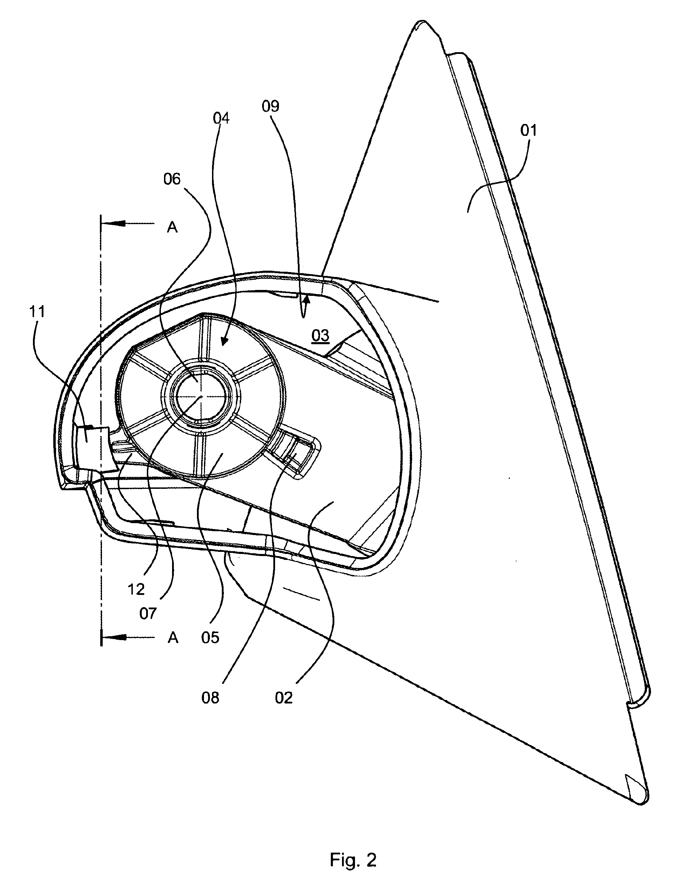

An der Spiegelfußabdeckung 01 kann im Bereich der Öffnung 03 eine Aufnahmetasche 11 für einen Vorsprung 12 vorgesehen sein, welcher Vorsprung 12 an einer den spiegelfußseitigen Teil 04 der gelenkigen Verbindung tragenden Partie des Spiegelfußes 02 angeordnet ist (Fig. 2, 3, 4). Die Aufnahmetasche 11 und der Vorsprung 12 sind dabei vorzugsweise derart ausgebildet, dass der Vorsprung 12 nur bis in eine vorgegebene Tiefe in die Aufnahmetasche 11 eindringen kann. Darüber hinaus können die Aufnahmetasche 11 und der Vorsprung eine Geometrie aufweisen, welche eine Selbstzentrierung des Vorsprungs 12 beim Hineinschieben in die Aufnahmetasche 11 ermöglicht. Beispielsweise kann sich der Vorsprung 12 hierzu zu seinem Ende hin konisch verjüngen. Die Aufnahmetasche kann sich ebenfalls mit zunehmender Eindringtiefe des Vorsprungs 12 verjüngen.

Der Spiegelfußdeckel 10 weist vorzugsweise eine dem spiegelfußseitigen Teil 04 der gelenkigen Verbindung zugeordnete Ausnehmung 13 auf. Die Ausnehmung 13 kann passgenau für den spiegelfußseitigen Teil 04 der gelenkigen Verbindung ausgeführt sein. Die Ausnehmung 13 kann in Form einer zentralen Öffnung 14 ausgeführt sein, so dass sich der Spiegelfußdeckel 10 allseitig zwischen dem Rand 09 der Öffnung 03 und dem spiegelfußseitigen Teil 04 der gelenkigen Verbindung erstreckt.

Die Spiegelfußdeckelanordnung 19 schließt wenigstens an den Rand 09 der Öffnung 03 an oder überlappt diesen vorzugsweise mit der beispielsweise aus einem thermoplastischen Elastomer bestehenden Dichtung 15. Auch reicht der Spiegelfußdeckel 10 der Spiegelfußdeckelanordnung 19 bevorzugt bis an den spiegelfußseitigen Teil 04 der gelenkigen Verbindung.

Die Dichtung 15 überlappt vorzugsweise den Rand 09, um eine einwandfreie Abdichtung und einen zuverlässigen Schutz gegen das Eindringen von Spritzwasser und Schmutz in den von der Spiegelfußabdeckung 01 umschlossenen und den Spiegelfuß 02 beherbergenden Raum sicherzustellen. Die Dichtung 15 kann beispielsweise in einem Zwei- oder Mehrkomponentenspritzgießverfahren an den Spiegelfußdeckel 10 angespritzt sein. Zusätzlich kann zwischen dem spiegelfußseitigen Teil 04 der gelenkigen Verbindung und dem Spiegelfußdeckel 10 eine Dichtung vorgesehen sein.

Die Dichtung 15 kann darüber hinaus so ausgeführt sein, dass sie gleichzeitig die gelenkige Verbindung gegen Staub und Spritzwasser schützt. Hierzu kann die Dichtung 15 in Richtung der Gelenkachse 07 über die vom Rand 09 der in der Spiegelfußabdeckung 01 vorgesehenen Öffnung 03 aufgespannte Fläche ragen. Dies entspricht einer Richtung zum den eingangs erwähnten Grundträger beherbergenden Außenrückblickspiegelgehäuse.

Der Spiegelfußdeckel 10 kann beispielsweise zwei von einem gedachten Mittelpunkt des Spiegelfußdeckels 10 aus gesehen radial nach außen abstehende Laschen 16 aufweisen. In einem die zwischen dem Rand 09 der Öffnung 09 und dem spiegelfußseitigen Teil 04 der gelenkigen Verbindung verbleibende Partie der Öffnung 03 abdeckendem Zustand des Spiegelfußdeckels 10 hintergreifen die Laschen 16 den Rand 09 der Öffnung 03 in einer Draufsicht auf eine durch den Rand 09 der Öffnung 03 aufgespannte Fläche aus gesehen. Der gedachte Mittelpunkt liegt beispielsweise auf der Gelenkachse 07.

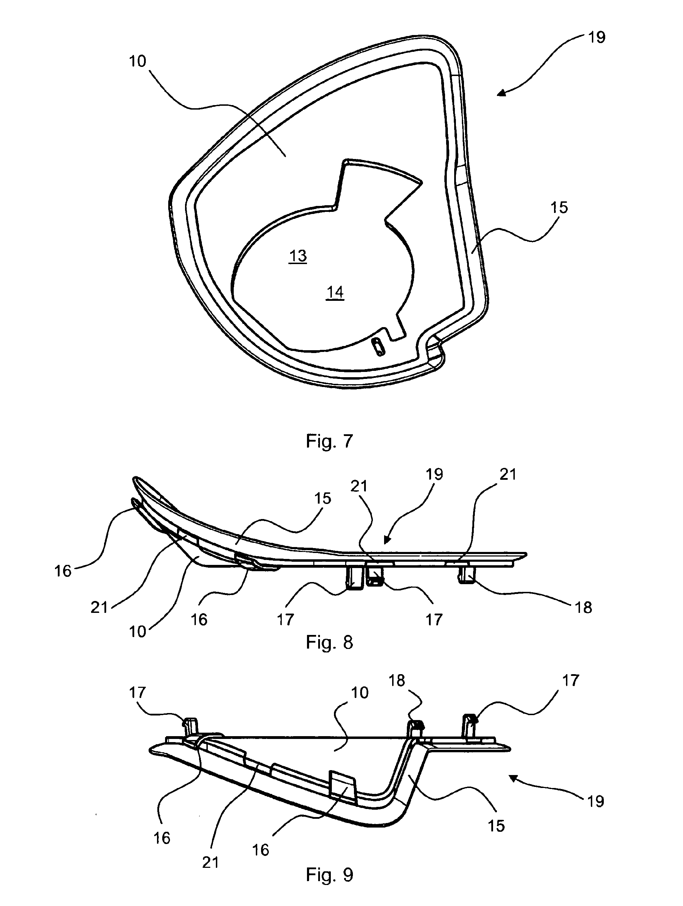

Wichtig ist hierbei hervorzuheben, dass die vom Rand 09 der Öffnung 03 aufgespannte Fläche ebenso wie die durch die Kontur des Spiegelfußdeckels 10 aufgespannte Fläche nicht einer Ebene entsprechen muss, wie aus den Fig. 7, 8 und 9 ersichtlich ist.

Der Spiegelfußdeckel 10 kann alternativ oder zusätzlich beispielsweise zwei Rastnasen 17 aufweisen, welche den Rand 09 der Öffnung 03 von einer Draufsicht auf eine durch den Rand 09 der Öffnung 03 aufgespannte Fläche aus gesehen hintergreifen.

Darüber hinaus kann der Spiegelfußdeckel 10 mindestens eine Rastnase 18 aufweisen, welche der Aufnahmetasche 11 für den am Spiegelfuß 02 angeordneten Vorsprung 12 zugeordnet ist. Die Zuordnung sieht dabei beispielsweise vor, dass die Rastnase 18 eine derart weit in Richtung parallel zur Gelenkachse 07 in die Öffnung 03 reichende Erstreckung aufweist, dass sie von der durch den Rand 09 der Öffnung 03 gebildeten Fläche aus gesehen bis hinter die Aufnahmetasche 11 reicht, um diese zu hintergreifen.

Die Rastnasen 17, 18 sind dabei vorzugsweise in einem Bereich des Spiegelfußdeckels 10 angeordnet, der gegenüber mindestens einer an dem Spiegelfußdeckel 10 radial nach außen abstehenden Laschen 16 liegt.

Der Begriff Rastnase steht hierbei stellvertretend für ein Rastmittel einer Rastverbindung. Eine auch als Klipsverbindung oder als Schnappverbindungen bezeichenbare Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt. Beispiele für derart korrespondierende Rastelemente sind ein elastisch verformbares Rastmittel und eine Hintergreifung. Beispielsweise kann das Rastmittel in Form einer blattförmigen, biegesteifen Feder mit einem daran quer zur Längserstreckung der Feder und normal zu einer durch die Feder gebildete Ebene angeordneten Fortsatz ausgeführt sein. Der Fortsatz ist so ausgebildet, dass er in der Lage ist, einen Rand oder einen Vorsprung zu hintergreifen oder in eine Hintergreifung oder ein Rastfenster einzurasten. Durch die biegesteife Feder kann der Fortsatz während des Zusammenfügens normal zur durch die Feder gebildete Ebene einem beispielsweise durch den Rand 09 der Öffnung 03 gebildeten korrespondierenden Rastelement ausweichen, um anschließend nach Passieren des Rastelements durch Zurückfedern unter gleichzeitigem Hintergreifen hinter diesem einzurasten.

Die Erfindung ist insbesondere im Bereich der Herstellung von Außenrückblickspiegelanordnungen für Kraftfahrzeuge gewerblich anwendbar.

### Bezugszeichenliste

- 01: Spiegelfußabdeckung
- 02: Spiegelfuß
- 03: Öffnung
- 04: spiegelfußseitiger Teil einer gelenkigen Verbindung
- 05: Auflager
- 06: Welle
- 07: Gelenkachse
- 08: Zapfen
- 09: Rand
- 10: Spiegelfußdeckel
- 11: Aufnahmetasche
- 12: Vorsprung
- 13: Ausnehmung
- 14: zentrale Öffnung
- 15: Dichtung
- 16: Lasche
- 17: Rastnase
- 18: Rastnase
- 19: Spiegelfußdeckelanordnung
- 20: Spalt bzw. Spaltabschnitt
- 21: Fortsatz

## Patentansprüche

1. Außenrückblickspiegelanordnung eines Kraftfahrzeugs mit einer Öffnung (03) für einen spiegelfußseitigen Teil (04) einer gelenkigen Verbindung eines vorzugsweise in einem Außenrückblickspiegelgehäuse beherbergten Grundträgers mit einem mittels einaspiegelfußabdeckung (01) verkleideten Spiegelfuß (02), wobei die Öffnung (03) größer ist, als für den spiegelfußseitigen Teil (04) der gelenkigen Verbindung erforderlich und eine zwischen dem Rand (09) der Öffnung (03) und dem spiegelfußseitigen Teil (04) der gelenkigen Verbindung verbleibende Partie der Öffnung (03) durch eine Spiegelfußdeckelanordnung (19) verschlossen ist, welche aus einem die verbleibende Partie der Öffnung zum Teil abdeckenden Spiegelfußdeckel (10) und einer an diesen angespritzten, einen verbleibenden Spalt (20) zwischen Spiegelfußdeckel (10) und dem Rand (09) der Öffnung (03) überdeckenden Dichtung (15) besteht,
wobei
der Spiegelfußdeckel (10) zumindest abschnittsweise bis an den Rand (09) der Öffnung (03) reicht, so dass zumindest stellenweise ein Kontakt des Spiegelfußdeckels (10) mit dem Rand (09) der Öffnung (03) hergestellt ist.

2. Außenrückblickspiegelanordnung nach Anspruch 1,
**dadurch gekennzeichnet,**
**dass** am Umfang des Spiegelfußdeckels (10) Fortsätze (21) angeordnet sind, welche bei in die Öffnung (03) eingesetzter Spiegelfußdeckelanordnung (19) in der durch den Rand (09) der Öffnung (03) aufgespannten Fläche liegen und bis an den Rand (09) der Öffnung (03) reichen.

3. Außenrückblickspiegelanordnung nach Anspruch 1 oder 2,
**dadurch gekennzeichnet,**
**dass** die Dichtung (15) im Zwei- oder Mehrkomponentenspritzgussverfahren an den Spiegelfußdeckel (10) angespritzt ist.

4. Außenrückblickspiegelanordnung nach Anspruch 1, 2 oder 3,
**dadurch gekennzeichnet,**
**dass** der Spiegelfußdeckel (10) mindestens eine radial nach außen abstehende Lasche (16) aufweist, welche den Rand (09) der Öffnung (03) von einer Draufsicht auf eine durch den Rand (09) der Öffnung (03) aufgespannte Fläche aus gesehen hintergreift.

5. Außenrückblickspiegelanordnung nach einem der vorhergehenden Ansprüche,
**dadurch gekennzeichnet,**
**dass** der Spiegelfußdeckel (10) wenigstens eine Rastnase (17) aufweist, welche den Rand (09) der Öffnung (03) von einer Draufsicht auf eine durch den Rand (09) der Öffnung (03) aufgespannte Fläche aus gesehen hintergreift.

6. Außenrückblickspiegelanordnung nach Anspruch 5,
**dadurch gekennzeichnet,**
**dass** wenigstens eine Rastnase (17, 18) in einem Bereich des Spiegelfußdeckels (10) angeordnet ist, der gegenüber mindestens einer an dem Spiegelfußdeckel (10) radial nach außen abstehenden Lasche (16) liegt, welche den Rand (09) der Öffnung (03) von einer Draufsicht auf eine durch den Rand (09) der Öffnung (03) aufgespannte Fläche aus gesehen hintergreift.

7. Außenrückblickspiegelanordnung nach einem der vorhergehenden Ansprüche,
**gekennzeichnet durch**
eine an der Spiegelfußabdeckung (10) im Bereich der Öffnung (03) vorgesehene Aufnahmetasche (11) für einen an einer den spiegelfußseitigen Teil (04) der gelenkigen Verbindung tragenden Partie des Spiegelfußes (02) angeordneten Vorsprung (12).

8. Außenrückblickspiegelanordnung nach Anspruch 7,
**dadurch gekennzeichnet,**
**dass** der Vorsprung (12) und die Aufnahmetasche (11) selbstzentrierend sind.

9. Außenrückblickspiegelanordnung nach Anspruch 7 oder 8,
**gekennzeichnet durch**
mindestens eine an dem Spiegelfußdeckel (10) angeordnete, der Aufnahmetasche (11) zugeordnete Rastnase (18).

10. Außenrückblickspiegelanordnung nach einem der vorhergehenden Ansprüche,
**dadurch gekennzeichnet,**
**dass** wenigstens zwischen dem spiegelfußseitigen Teil (04) der gelenkigen Verbindung und dem Spiegelfußdeckel (10) eine Dichtung vorgesehen ist.

## Claims

1. An external rear view mirror assembly of a motor vehicle with an opening (03) for a mirror foot side part (04) of an articulated connection of a base support preferably housed in an external rear view mirror housing with a mirror foot (02) clad by means of a mirror foot cover (01), wherein the opening (03) is larger than required for the mirror foot side part (04) of the articulated connection and a section of the opening (03) remaining between the rim (09) of the opening (03) and the mirror foot side part (04) of the articulated connection is closed by a mirror foot lid assembly (19), which consists of a mirror foot lid (10) covering the remaining part of the opening partly and a gasket (15) molded onto said lid and overlapping a remaining gap (20) between the mirror foot lid (10) and the rim (09) of the opening (03),
wherein
the mirror foot lid (10) extends up to the rim (09) of the opening (03) at least sectionally, such that the mirror foot lid (10) is in contact with the rim (09) of the opening (03) at least in certain places.

2. The external rear view mirror assembly according to claim 1,
**characterized in that**
along the periphery of the mirror foot lid (10) prolongations (21) are arranged, which, with the mirror foot lid assembly (19) inserted in the opening (03), are within the area defined by the rim (09) of the opening (03) and extend up to the rim (09) of the opening (03).

3. The external rear view mirror assembly according to claim 1 or 2,
**characterized in that**
the gasket (15) is molded onto the mirror foot lid (10) using the two- or multi-component injection molding method.

4. The external rear view mirror assembly according to claim 1, 2 or 3,
**characterized in that**
the mirror foot lid (10) has at least one radially outwardly protruding tongue (16), which, as seen in a top view onto an area defined by the rim (09) of the opening (03), engages behind the rim (09) of the opening (03).

5. The external rear view mirror assembly according to any one of the preceding claims,
**characterized in that**
the mirror foot lid (10) has at least one snap-lock nose (17), which, as seen in a top view onto an area defined by the rim (09) of the opening (03), engages behind the rim (09) of the opening (03).

6. The external rear view mirror assembly according to claim 5,
**characterized in that**
at least one snap-lock nose (17, 18) is arranged in a region of the mirror foot lid (10) which is opposite at least one tongue (16) protruding radially outwardly at the mirror foot lid (10), which, as seen in a top view onto an area defined by the rim (09) of the opening (03), engages behind the rim (09) of the opening (03).

7. The external rear view mirror assembly according to any one of the preceding claims,
**characterized by**
a receiving pocket (11) provided on the mirror foot cover (10) in the region of the opening (03) for a projection (12) arranged on a section of the mirror foot (02) carrying the mirror foot side part (04) of the articulated connection.

8. The external rear view mirror assembly according to claim 7,
**characterized in that**
the projection (12) and the receiving pocket (11) are self-centering.

9. The external rear view mirror assembly according to claim 7 or 8,
**characterized by**
at least one snap-lock nose (18) arranged on the mirror foot lid (10) and associated with the receiving pocket (11).

10. The external rear view mirror assembly according to any one of the preceding claims,
**characterized in that**
a gasket is provided at least between the mirror foot side part (04) of the articulated connection and the mirror foot lid (10).

## Revendications

1. Agencement de rétroviseur extérieur d'un véhicule à moteur ayant une ouverture (03) pour une partie côté pied de rétroviseur (04) d'une connexion articulée d'un étrier de base, qui est de préférence agencé dans un boîtier de rétroviseur extérieur ayant un pied de rétroviseur (02) recouvert d'un recouvrement de pied de rétroviseur (01), de sorte que l'ouverture (03) est plus grande que nécessaire pour la partie côté pied de rétroviseur (04) de la connexion articulée, et un tronçon de l'ouverture (03) restant entre le bord (09) de l'ouverture (03) et la partie côté pied de rétroviseur (04) de la connexion articulée est fermé par un agencement de couvercle de pied de rétroviseur (19), qui est constitué d'un couvercle de pied de rétroviseur (10) recouvrant partiellement le tronçon restant de l'ouverture, et d'un joint d'étanchéité (15) moulé sur celui-ci, qui chevauche un espace restant (20) entre le couvercle de pied de rétroviseur (10) et le bord (09) de l'ouverture (03),
dans lequel
le couvercle de pied de rétroviseur (10) s'étend au moins partiellement vers le bord (09) de l'ouverture (03), de sorte qu'un contact entre le couvercle de pied de rétroviseur (10) et le bord (09) de l'ouverture (03) est réalisé au moins par endroits.

2. Agencement de rétroviseur extérieur selon la revendication 1, **caractérisé en ce que** sur la périphérie du couvercle de pied de rétroviseur (10) sont agencés des prolongements (21) qui, par l'intermédiaire de l'agencement de couvercle de pied de rétroviseur (19) installé dans l'ouverture (03), s'étendent dans la surface délimitée par le bord (09) de l'ouverture (03), et atteignent le bord (09) de l'ouverture (03).

3. Agencement de rétroviseur extérieur selon la revendication 1 ou 2, **caractérisé en ce que** le joint d'étanchéité (15) est moulé sur le couvercle de pied de rétroviseur (10) dans un procédé de moulage par injection à deux ou plus de deux composants.

4. Agencement de rétroviseur extérieur selon les revendications 1, 2 ou 3, **caractérisé en ce que** le couvercle de pied de rétroviseur (10) comporte au moins une patte (16) faisant saillie vers l'extérieur d'une manière radiale, qui vient en prise avec le bord (09) de l'ouverture, vu depuis une vue de dessus d'une surface délimitée par le bord (09) de l'ouverture (03).

5. Agencement de rétroviseur extérieur selon l'une quelconque des revendications précédentes, **caractérisé en ce que** le couvercle de pied de rétroviseur (10) comporte au moins un loquet (17), qui vient en prise avec le bord (09) de l'ouverture, vu depuis une vue de dessus d'une surface délimitée par le bord (09) de l'ouverture (03).

6. Agencement de rétroviseur extérieur selon la revendication 5, **caractérisé en ce qu'**au moins un loquet (17, 18) est agencé dans une zone du couvercle de pied de rétroviseur (10), qui se trouve opposée à au moins une patte (16) faisant saillie vers l'extérieur d'une manière radiale sur le couvercle de pied de rétroviseur (10), qui vient en prise avec le bord (09) de l'ouverture, vu depuis une vue de dessus d'une surface délimitée par le bord (09) de l'ouverture (03).

7. Agencement de rétroviseur extérieur selon l'une quelconque des revendications précédentes, **caractérisé par** une poche de réception (11) fournie sur le couvercle de pied de rétroviseur (10) dans la zone de l'ouverture (03), destinée à une saillie (12) agencée sur le tronçon du pied de rétroviseur (02) portant la partie côté pied de rétroviseur (04) de la connexion articulée.

8. Agencement de rétroviseur extérieur selon le revendication 7, **caractérisé en ce que** la saillie (12) et la poche de réception (11) sont auto-centrantes.

9. Agencement de rétroviseur extérieur selon les revendications 7 ou 8, **caractérisé par** au moins un loquet (18) agencé sur le couvercle de pied de rétroviseur (10), associé à la poche de réception (11).

10. Agencement de rétroviseur extérieur selon l'une quelconque des revendications précédentes, **caractérisé en ce qu'**un joint d'étanchéité est agencé au moins entre la partie côté pied de rétroviseur (04) de la connexion articulée et le couvercle de pied de rétroviseur (10).
